# EUROPEAN PATENT SPECIFICATION

(11) **EP 2 888 512 B1**
(45) Date of publication and mention of the grant of the patent: **25.04.2018**
(21) Application number: 13763346.7
(22) Date of filing: 26.08.2013
(51) Int. Cl.: F16K 1/12

(54) **AXIAL FLUID VALVES WITH ANNULAR FLOW CONTROL MEMBERS**
AXIALFLÜSSIGKEITSVENTILE MIT RINGFÖRMIGEN STRÖMUNGSSTEUERUNGSELEMENTEN
VANNES AXIALES POUR FLUIDE AVEC ORGANES ANNULAIRES DE COMMANDE DU DÉBIT

(30) Priority: 27.08.2012 US 201213595140
(43) Date of publication of application: 01.07.2015
(73) Proprietor: Fisher Controls International LLC, Marshalltown, IA 50158 (US)
(72) Inventor: SCHADE, Ross, Arthur, Ames, IA 50010 (US); BLUM, Darren, Allan, Naperville, IL 60565 (US); BELL, Jacob, Warner, Decatur, IL 62521 (US); PRATHAPASINGHE, Dumindu, Gayan, East Moline, 61244 (US)
(74) Representative: Hardy, Rosemary
(86) International application number: PCT/US2013/056560
(87) International publication number: WO 2014/035855

(56) References cited:
- EP-A2- 1 371 885
- BE-A- 530 628
- FR-A- 1 137 011
- US-A- 6 116 571
- US-A1- 2001 011 715
- US-A1- 2004 035 462
- US-A1- 2004 183 044
- US-A1- 2004 222 400

## Description

### FIELD OF THE DISCLOSURE

The present disclosure relates generally to axial fluid valves and, more specifically, to axial fluid valves having annular flow control members.

### BACKGROUND

Fluid control valves (e.g., sliding stem valves, globe valves, rotary valves, butterfly valves, ball valves, etc.) are used in process control systems to control the flow of process fluids and typically include an actuator (e.g., rotary actuator, linear actuator, etc.) to automate operation of the valve. Some of these fluid control valves, although effective in many applications, involve tradeoffs. For example, butterfly valves may be used to control large flow volumes in an efficient manner, but are only capable of modest accuracy, and the seals therein are often limited in life cycle and temperature range. Globe valves, on the other hand, typically provide rigid trim and precise control, but often provide lower flow capacity for a given line size.

In-line or axial fluid control valves are an alternative to the above-mentioned fluid control valves. One benefit of axial valves is that they incorporate globe valve style trim and, thus, the advantages offered thereby. Specifically, in axial valves, this trim may be oriented relative to the fluid flow path to increase efficiency and reduce energy losses due to noise and turbulence. The output shaft of an actuator is commonly connected to a flow control member (e.g., a plug) within a valve body of an axial valve via a rack-on-rack, rack-and-pinion or similar gear assembly. The actuator moves the flow control member within the valve body relative to a seat ring between an open position and a closed position to allow or prevent the flow of fluid through the valve.

However, many known axial fluid valves still exhibit problems controlling fluid flow without substantial disturbances or energy loss due to turbulence. These known axial fluid valves often utilize actuators and transmissions within the fluid flow path which, as a result, create restrictions that increase turbulent flow through the axial fluid valve. Further, many of these axial fluid valves exhibit problems with actuation and sealing (e.g., gaskets, packing, seal rings). The actuators and transmissions within the fluid flow path require a large number of seals and gaskets to protect the internal gears and other actuation components from pressurized process fluid. For example, these known axial fluid valves having externally mounted actuators typically require use of a packing to seal against a valve stem that extends into the valve body. A packing can fail and result in leakage of process fluid. In other examples, some known axial valves use a complex gearbox to translate motion from an actuator to linear motion of a plug. Typically, the gearbox is in the fluid flow path and, thus, requires numerous seals to prevent process fluid from entering the gearbox. Operating axial fluid valves with such a large number of moving parts requiring numerous seals greatly increases the possibility of leakage of fluid outside the valve body and increases manufacturing and maintenance costs. US2004/0222400 discloses an apparatus according to the preamble of the appended independent claim 1. FR1137011 and BE530628 disclose other examples of known valves.

### SUMMARY

A first aspect of the invention relates to an apparatus including an axial flow valve body defining a passageway between an inlet and an outlet. The example apparatus includes a sleeve slidably received by an inner surface of the valve body and movable along an axis substantially parallel to a longitudinal axis of the passageway between a first open position and a second closed position. The sleeve has a first end forming a first opening and a second end forming a second opening.

The apparatus includes a linkage or gear operatively connected to the sleeve to move the sleeve to vary a flow of fluid between the inlet and the outlet through the sleeve. When the sleeve is in the first open position, fluid flow through the second opening formed by the second end of the sleeve is permitted.

The sleeve further comprises a plurality of axially aligned slots provided at the second end of the sleeve. When the sleeve is in the first open position, fluid flow through the plurality of axially aligned slots is additionally permitted.

### BRIEF DESCRIPTION OF THE DRAWINGS

FIG. 1A illustrates a cross-sectional side view of an example axial fluid valve with a linear actuator in a first position.
FIG. 1B illustrates a cross-sectional side view of the example axial fluid valve of FIG. 1A in a second position.
FIG. 2 illustrates a cross-sectional side view of an example axial fluid valve with an alternative linear actuator orientation.
FIG. 3A illustrates a cross-sectional top view of an example axial fluid valve with a rotary actuator in a first position.
FIG. 3B illustrates a cross-sectional top view of the example axial fluid valve of FIG. 3A in a second position.
FIG. 3C illustrates a cross-sectional side view of the example axial fluid valve of FIGS. 3A and 3B.

### DETAILED DESCRIPTION

Certain examples are shown in the above-identified figures and described in detail below. In describing these examples, like or identical reference numbers are used to identify the same or similar elements. The figures are not necessarily to scale and certain features and certain views of the figures may be shown exaggerated in scale or in schematic for clarity and/or conciseness. Additionally, several examples have been described throughout this specification. Any features from any example may be included with, a replacement for, or otherwise combined with other features from other examples.

The example axial fluid valves described herein reduce valve noise, provide an axially aligned fluid flow passageway to reduce turbulent flow and improve flow capacity, significantly eliminate in-flow actuating components, which require numerous seals and gaskets, and increase flow efficiency to enable the use of smaller pumps and piping. In general, the example axial fluid valves described herein use an annular flow control member (e.g., a sleeve) to vary a flow of fluid that passes through the annular flow control member and around a seal, which is disposed (e.g., centrally) within a passageway of an axial valve body.

More specifically, in an example axial fluid valve described herein, a sleeve is slidably received by an inner surface of a valve body and moves (e.g., translates) along a fluid flow passageway. The sleeve may have a central axis that is coaxially aligned with a central axis of the passageway. The sleeve may be operatively coupled to an actuator (e.g., a linear actuator, a rotary actuator, etc.) to move the sleeve to control a flow of fluid between an inlet and an outlet of the axial fluid valve. The axial fluid valve may also include a seal centrally disposed within the passageway of the valve body and coupled to an inner surface of the valve body via a plurality of webs (e.g., support members). In operation, fluid flows into the sleeve at a first end, out of the sleeve at a second end and around the seal toward the outlet of axial fluid valve. The sleeve is to move, via the actuator, toward the seal so the second end of the sleeve engages the seal to prevent the flow of fluid through the sleeve and, thus, through the axial fluid valve. This axial fluid flow path greatly increases flow efficiency by reducing restrictions and, therefore, turbulent flow through the passageway of the valve.

An example axial fluid valve described herein includes a linear actuator having a stem positioned substantially perpendicular to the flow of fluid through the axial fluid valve. The linear actuator stem is operatively coupled (e.g., connected) to the sleeve via a link (e.g., a linkage). The link is disposed within a cavity of the valve body and is coupled to an outer surface of the sleeve. In operation, the link converts linear motion of the actuator to linear motion of the sleeve within the passageway of the valve body. The example axial fluid valve enables the sleeve to slide axially within the valve body and reduces the number of components within the fluid flow path of the axial fluid valve.

In another example axial fluid valve, the sleeve includes a plurality of teeth on an outer surface of the sleeve. A rotary actuator having a pinion (e.g., a gear) engages the teeth to move the sleeve axially within the valve body to control the flow of fluid through the sleeve and, thus, the passageway of the axial fluid valve.

In the example axial fluid valves described herein, the fluid flow path is substantially linear, which allows the fluid to travel through the valve with less energy loss and noise than many known valves. Furthermore, the examples described herein enable a relatively large portion of the moving components of an axial fluid valve to be disposed outside the fluid flow path or stream, thereby significantly reducing the number of seals and gaskets required. The sleeve and actuators or actuating means described herein significantly reduce the number of moving parts required to operate an axial fluid valve. Therefore, the sleeve and actuating means greatly simplify the manufacturing and machining requirements and, thus, decrease the cost of manufacturing an axial fluid valve.

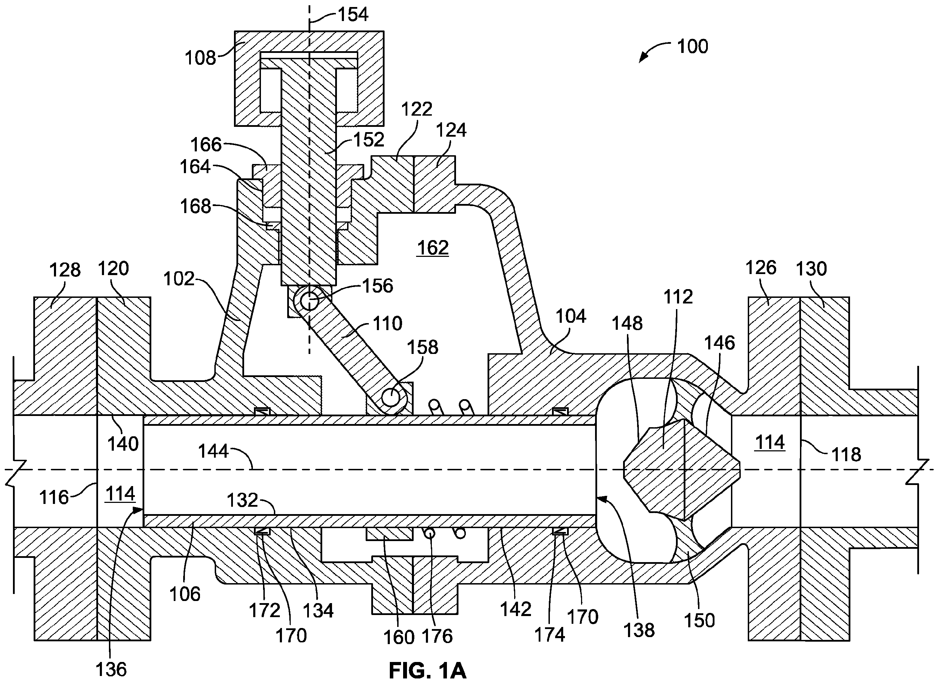

FIG. 1A illustrates a cross-sectional side view of an example axial fluid control valve 100 described herein. The axial fluid control valve 100 includes a first valve body portion 102, a second valve body portion 104, a sleeve 106, a linear actuator 108, a link 110 (e.g., a linkage) and a seal 112. The valve body portions 102 and 104 are coupled to define a passageway 114 that provides a fluid flow path between an inlet 116 and an outlet 118 when the axial fluid control valve 100 is installed in a fluid process system (e.g., a distribution piping system). In some examples, the first valve body portion 102 and the second valve body portion 104 may be integrally formed to define the axial fluid control valve 100 as a substantially unitary piece or structure.

The first valve body portion 102 includes a first flange 120 at the inlet 116 and a second flange 122 removably coupled to a third flange 124 of the second valve body portion 104. The second flange 122 of the first valve body portion 102 and the third flange 124 of the second valve body portion 104 may be removably coupled with any suitable fastening mechanism(s). The second valve body portion 104 also includes a fourth flange 126 at the outlet 118. In operation, the first flange 120 of the first valve body portion 102 may be coupled to an upstream pipe 128 and the fourth flange 126 of the second valve body portion 104 may be coupled to a downstream pipe 130.

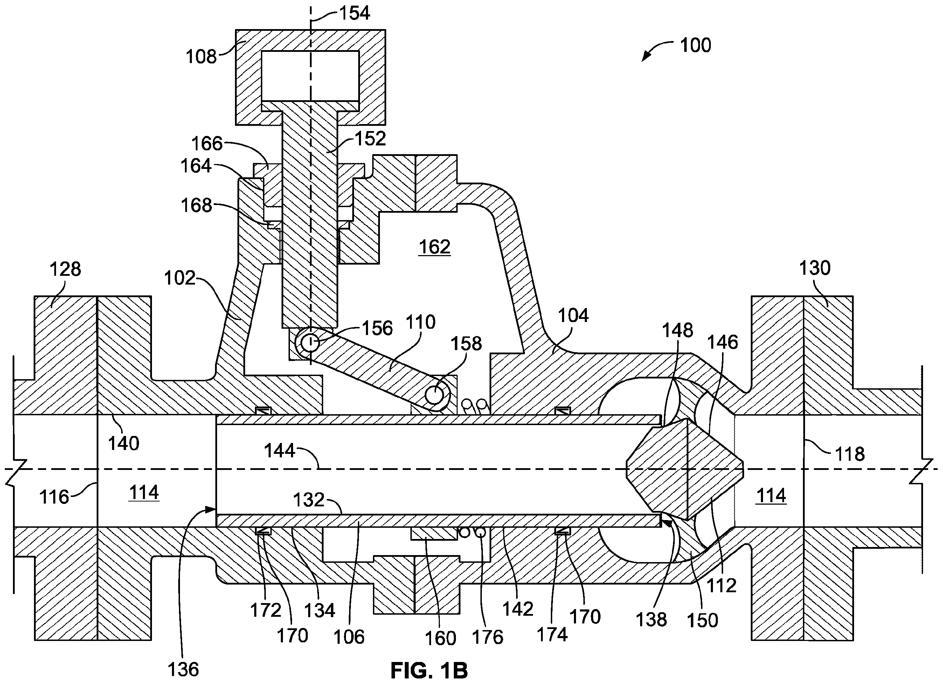

In the example shown in FIG. 1A, the axial fluid control valve 100 is in a first position (e.g., open), and in the example shown in FIG. 1B, the axial fluid control valve 100 is in a second position (e.g., closed). The axial fluid control valve 100 is interposed in a fluid flow path between an upstream supply source via the upstream pipe 128 and a downstream supply source via the downstream pipe 130. The process fluid may include any process fluid such as, for example, natural gas. In operation, the sleeve 106 operates between the first position to allow the flow of fluid between the inlet 116 and the outlet 118 (e.g., the open position) and the second position to prevent the flow of fluid between the inlet 116 and the outlet 118 (e.g., the closed position).

In the example axial fluid control valve 100 shown in FIGS. 1A and 1B, the sleeve 106 has an inner surface 132, an outer surface 134, a first end 136 and a second end 138. An inner surface 140 of the first valve body portion 102 slidably receives the outer surface 134 of the sleeve 106 near the first end 136 and an inner surface 142 of the second valve body portion 104 slidably receives the outer surface 134 of the sleeve 106 near the second end 138. The sleeve 106 is substantially axially (e.g., coaxially) aligned with an axis 144 of the axial fluid control valve 100 to define the fluid flow path through the first valve body portion 102, the second valve body portion 104 and the sleeve 106.

As shown in FIGS. 1A and 1B, the seal 112 is centrally disposed within the passageway 114 and substantially aligned along the axis 144 of the axial fluid control valve 100. The seal 112 includes a conical surface 146 and a sealing surface 148. The conical surface 146 provides a smooth flow path around the seal 112 to reduce turbulent fluid flow within the axial fluid valve 100. The sealing surface 148 is adapted to receive the second end 138 of the sleeve 106. The seal 112 may be any sealing member (e.g., plug) designed to engage or receive the second end 138 of the sleeve 106 to prevent the flow of fluid through the sleeve 106 and, thus, through the passageway 114. The seal 112 is coupled to the inner surface 142 of the second valve body portion 104 by a plurality of support members 150 (e.g., webbing). The support members 150 may be any structure used to support the seal 112 that are minimally restrictive to reduce obstruction in the fluid flow path and strong enough to support the seal 112 when receiving pressure from the process fluid and/or the sleeve 106.

In the example axial fluid valve 100 shown in FIGS. 1A and 1B, the sleeve 106 is operatively connected to an actuator stem 152 via the link 110. The actuator 108 is positioned such that the linear actuator stem 152 moves along an axis 154 that is substantially perpendicular to the axis 144 of the axial fluid valve 100. The link 110 is pivotably coupled to the actuator stem 152 at first joint 156 and pivotably coupled to the sleeve 106 at a second joint 158. The outer surface 134 of the sleeve 106 further includes a collar 160 on which the joint 158 is located. In some examples, the collar 160 may be integrally formed with the sleeve 106 as a substantially unitary piece or structure. The link 110 is disposed within a cavity 162 formed between the first valve body portion 102 and the second valve body portion 104. The actuator stem 152 moves through the first valve body portion 102 via a bore 164, which is sealed by a first stem seal 166 and a second stem seal 168 that support and provide surfaces to enable the actuator stem 152 to slide. In other embodiments, the bore 164 may include more or fewer stem seals.

To move the sleeve 106 within the passageway 114 of the valve body 102, 104, the linear actuator 108 moves the actuator stem 152 into the cavity 162. In this case, the actuator stem 152 causes the link 110 to translate and rotate counter-clockwise (in the orientation shown) to move the sleeve 106 along the axis 144 toward the seal 112. The axial fluid control valve 100 further comprises boundary seals 170, which are disposed within a first annular groove 172 in the first valve body portion 102 and a second annular groove 174 within the second valve body portion 104, respectively. The boundary seals 170 provide a tight seal between the outer surface 134 of the sleeve 106 and the inner surfaces 140 and 142 of the valve body portions 102 and 104. More specifically, the boundary seals 170 provide a pressure-tight seal to prevent leakage of process fluid into the cavity 162.

As shown in FIGS. 1A and 1B, the example axial fluid valve 100 also includes a spring 176 disposed between the second valve body portion 104 and the collar 160. The spring 176 biases the sleeve 106 in one direction and, thus, minimizes lost motion between the moving components. In other examples, the spring 176 may be disposed between the collar 160 and the first valve body portion 102, or between the first valve body portion 102 and the actuator stem 152. The spring 176 may be located in any other location within the axial fluid valve 100 to provide a biasing means to eliminate lost motion.

In operation, fluid is supplied to the inlet 116 by the upstream supply 128 and flows into the sleeve 106 through the first end 136. In the open position, as shown in the example of FIG. 1A, the fluid may flow out the second end 138 of the sleeve 106 and around the seal 112 toward the outlet 118 to the downstream supply 130. In the closed position, as shown in the example of FIG. 1B, the actuator stem 152 translates downward to move the second end 138 of the sleeve 106 to engage the sealing surface 148 of the seal 112 to prevent the flow of fluid through the sleeve 106 and, thus, between the inlet 116 and the outlet 118 of the axial fluid valve 100. However, in other examples, the flow may be reversed through the axial fluid valve 100 and, thus, the fluid may pass over the seal 112 first and then pass through the sleeve 106 second.

In the example shown in FIGS. 1A and 1B, the cross-section of the sleeve 106 is circular in shape. However, in other examples, the cross-section of the sleeve 106 may be square, rectangular, elliptical or any other shape corresponding (e.g., matching) to the shape of the inner surfaces 140 and 142 of the respective valve body portions 102 and 104.

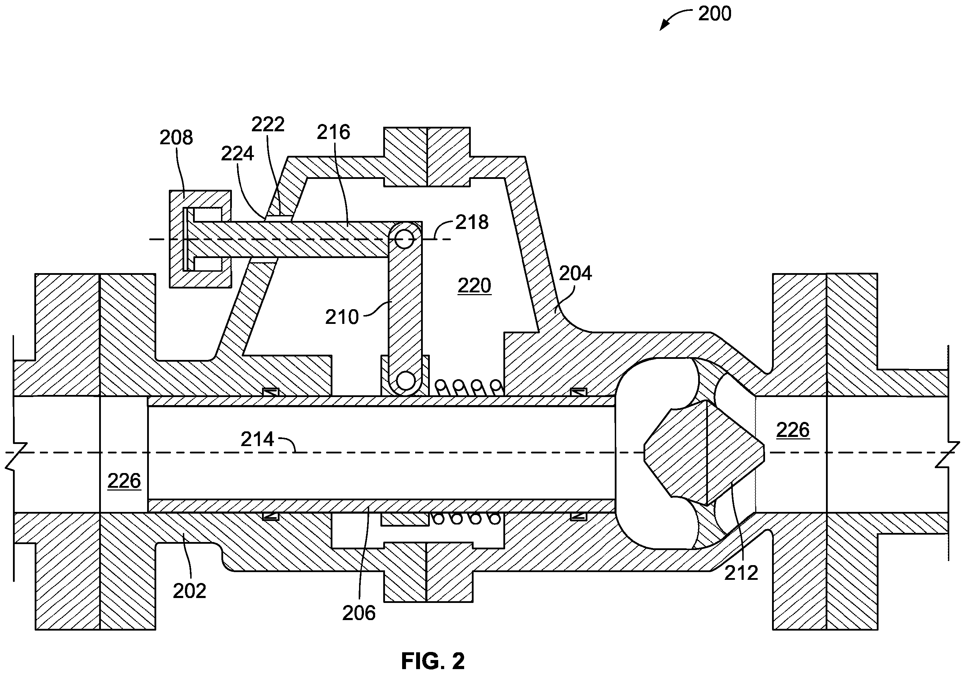

FIG. 2 illustrates a cross-sectional view of an axial fluid control valve 200 similar to the axial fluid control valve 100 of FIGS. 1A and 1B but having an alternatively oriented linear actuator 208. The axial fluid control valve 200 includes a first valve body portion 202, a second valve body portion 204, a sleeve 206, the linear actuator 208, a link 210 and a seal 212. The sleeve 206 is substantially axially (e.g., coaxially) aligned with an axis 214 of the axial fluid control valve 200 to define the fluid flow path through the first valve body portion 202, the second valve body portion 204 and the sleeve 206.

In the example axial fluid valve 200 shown in FIG. 2, the sleeve 206 is operatively connected to an actuator stem 216 via the link 210. The linear actuator 208 is positioned such that the actuator stem 216 moves along an axis 218 that is substantially parallel but offset (i.e., non-coaxial) to the axis 214 of the axial fluid valve 200. The link 210 is rigidly coupled to the actuator stem 216 and the sleeve 206. In other examples, the actuator stem 216 may be attached to the sleeve via any fastening mechanism known to those skilled in the art. The link 210 is disposed within a cavity 220 formed between the first valve body portion 202 and the second valve body portion 204. The actuator stem 216 moves through the first valve body portion 202 via a bore 222, which is sealed by a stem seal 224 that supports and provides a surface to enable the actuator stem 216 to slide. To move the sleeve 206 within a passageway 226 of the valve body portions 202 and 204, the linear actuator 208 moves the actuator stem 216 into the cavity 220. In this case, the link 210 transfers linear motion from the actuator stem 216 to move the sleeve 206 along the axis 214 toward the seal 212 and, thus, prevent the flow of fluid through the axial fluid valve 200.

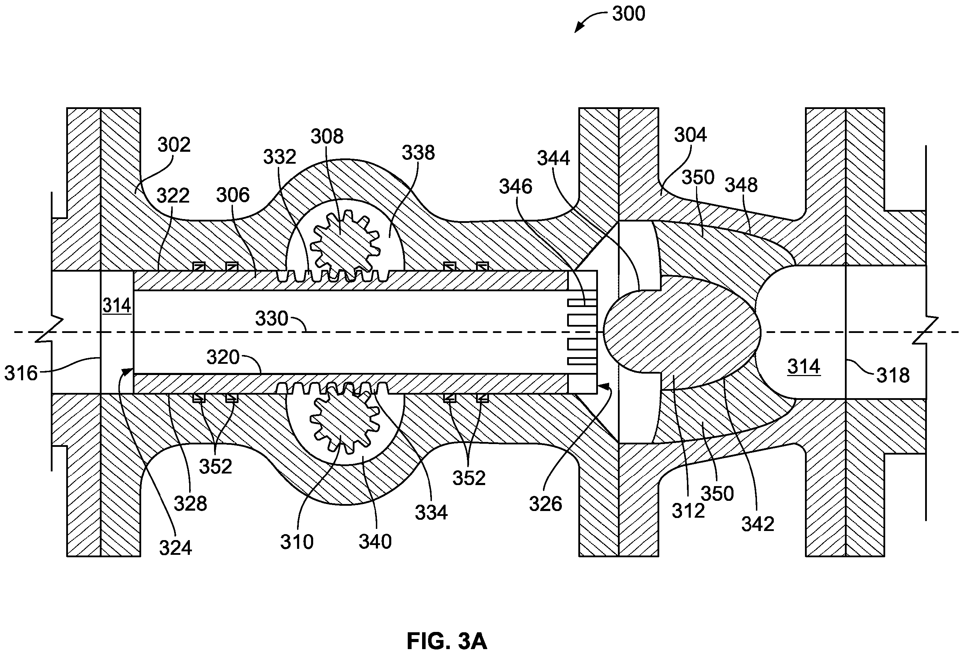

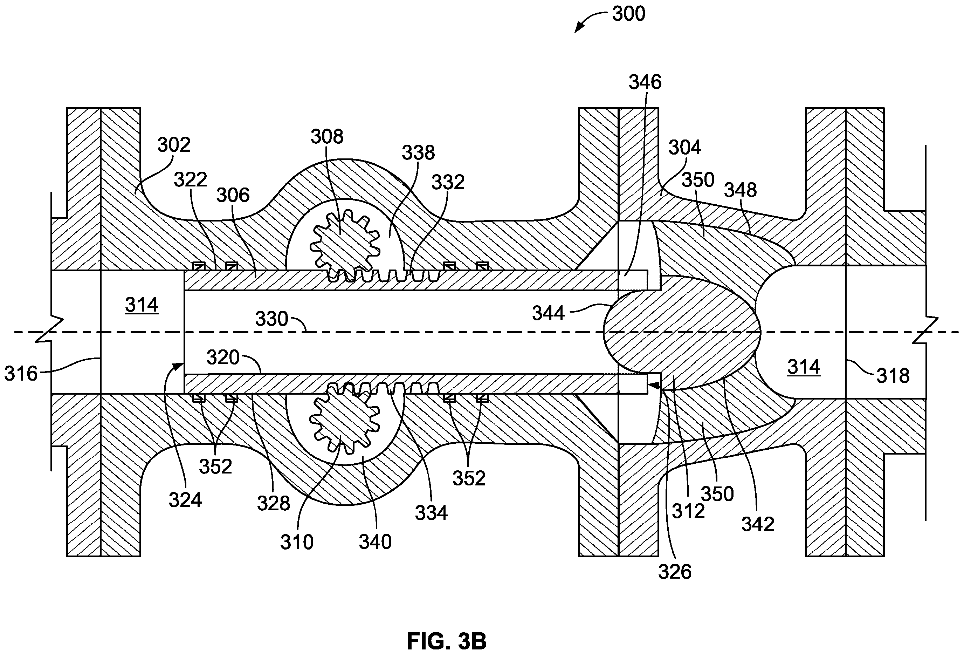

FIG. 3A illustrates a cross-sectional top view of an alternative example axial fluid control valve 300 described herein. The axial fluid control valve 300 includes a first valve body portion 302, a second valve body portion 304, a sleeve 306, a first pinion 308 (e.g., a gear), a second pinion 310 (e.g., a gear) and a seal 312. The first valve body portion 302 and the second valve body portion 304 are coupled to define a passageway 314 that provides a fluid flow path between an inlet 316 and an outlet 318 when the axial fluid control valve 300 is installed in a fluid process system. In operation, the sleeve 306 operates between a first position, shown in FIG. 3A, to allow a flow of fluid between the inlet 316 and the outlet 318 (e.g., an open position) and a second position, shown in FIG. 3B, to prevent the flow of fluid between the inlet 316 and the outlet 318 (e.g., a closed position).

In the example axial fluid control valve 300 shown in FIGS. 3A and 3B, the sleeve 306 has an inner surface 320, an outer surface 322, a first end 324 and a second end 326. An inner surface 328 of the first valve body portion 302 slidably receives the outer surface 322 of the sleeve 306. The first valve body portion 302, the second valve body portion 304 and the sleeve 306 form the passageway 314 for the flow of fluid. The sleeve 306 is substantially axially (e.g., coaxially) aligned along an axis 330 of the axial fluid control valve 300.

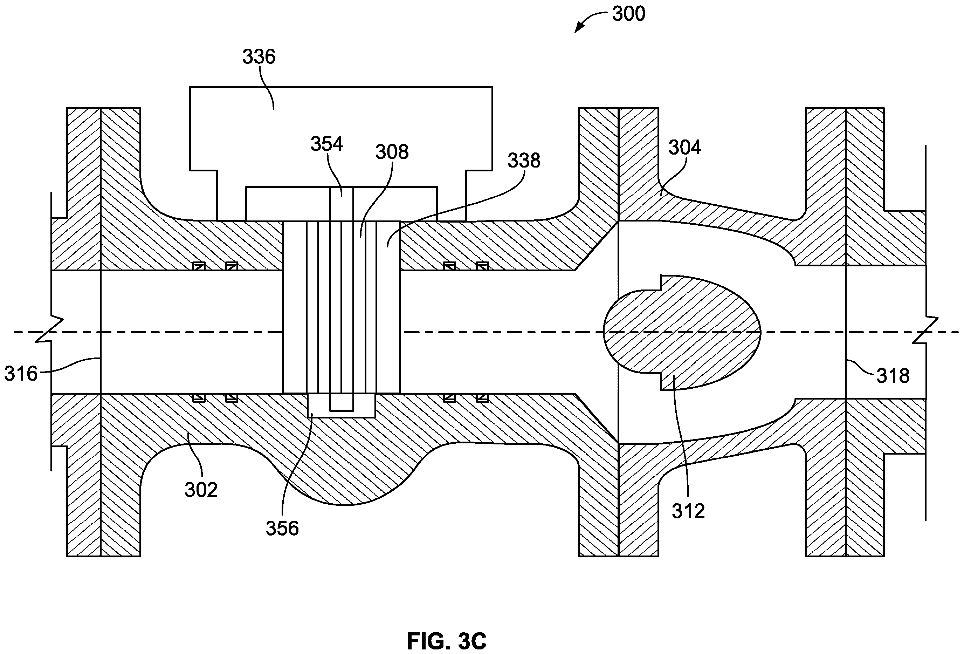

In the example shown, the outer surface 322 of sleeve 306 further includes a first toothed portion 332 and a second toothed portion 334. The first pinion 308 and the second pinion 310, which are coupled to a rotary actuator 336 (shown in FIG. 3C), engage the first and second toothed portions 332 and 334, respectively, to move the sleeve 306 axially within the axial fluid valve 300. In the example shown, the first pinion 308 is disposed with a first cavity 338 formed within the first valve body portion 302, and the second pinion 310 is disposed within a second cavity 340 formed within the first valve body portion 302. In other examples, a single rotary actuator and pinion may be used.

The seal 312 is centrally disposed within the passageway 314 and axially aligned with the axis 330 of the axial fluid control valve 300. The seal 312 includes a conical surface 342 and a sealing surface 344. The sealing surface 344 is adapted to receive the second end 326 of the sleeve 306. The second end 326 of the sleeve 306 further includes a plurality of slots to further allow fine control of the flow of fluid through the axial fluid valve 300. As shown in FIG. 3B, as the second end 326 of the sleeve 306 engages the seal 312, the slots 346 become smaller and, thus, allow less fluid to pass through the sleeve 306 and out the second end 326. The slots 346 allow a more controlled (e.g., throttled) flow of fluid through the axial valve 300. The seal 312 is coupled to an inner surface 348 of the second valve body portion 304 by a plurality of support members 350 (e.g., webs, ribs, etc.). The axial fluid valve 300 further comprises a plurality of boundary seals 352 disposed between the outer surface 322 of the sleeve 306 and the inner surface 328 of the first valve body portion 302. In other examples, the axial fluid valve 300 may include more or fewer boundary seals 352 to prevent leakage of process fluid.

FIG. 3C illustrates a cross-sectional side view of the axial flow valve 300 without the sleeve 306. As seen in the example, the rotary actuator 336 is operatively coupled to the first pinion 308 via a first spindle 354. The first spindle 354 engages a notch 356 within the first cavity 338 in the first valve body portion 302. In other examples, the spindle 354 may further include a bushing (e.g., bearing) to ensure smooth rotation of the pinion 308.

With reference to FIGS. 3A-C, in operation, process fluid enters the first valve body portion 302 at the inlet 316 and flows into the sleeve 306 at the first end 324. In the open position, as shown in the example in FIG. 3A, the fluid may flow out of the second end 326 and around the seal 312 toward the outlet 318. To reach the closed position, as shown in the example in FIG. 3B, the first pinion 308 rotates counter-clockwise and the second pinion 310 rotates clockwise to move the sleeve 306 toward the seal 312. As the second end 326 of the sleeve 306 engages the sealing surface 328 of the seal 312, the process fluid is prevented from flowing through the sleeve 306 and, thus, between the inlet 316 and the outlet 318 of the axial fluid valve 300. In other examples, the sleeve may be slidably moved within the axial fluid valve by any device or mechanism, such as an electric actuator, a hydraulic actuator, a pneumatic actuator, a piezoelectric actuator, an electromechanical actuator and any combination thereof.

The example axial fluid control valves 100 and 300 described herein advantageously decrease turbulent flow and noise, significantly reduce the number of in-flow actuating components, and increase flow efficiency by providing a substantially linear passageway between an inlet and outlet with a minimally restrictive flow path. The example axial fluid control valves 100 and 300 also reduce unwanted leakage because the actuation components are disposed outside the pressure boundary of the fluid stream.

Although certain example apparatus have been described herein, the scope of coverage of this patent is not limited thereto. On the contrary, this patent covers all apparatus falling within the scope of the appended claims.

## Claims

1. An apparatus comprising:
an axial flow valve body (302, 304) defining a passageway (314) between an inlet (316) and an outlet (318);
a sleeve (306) slidably received by an inner surface of the valve body (302, 304) and movable along an axis substantially parallel to a longitudinal axis (330) of the passageway (314) between a first open position and a second closed position, the sleeve (306) having a first end (324) and a second end (326), the longitudinal axis (330) intersecting an opening formed by the second end; and
a linkage or a gear (308, 310) operatively connected to the sleeve (306) to move the sleeve (306) to vary a flow of fluid between the inlet (316) and the outlet (318) through the sleeve (306);
wherein, when the sleeve (306) is in the first open position, fluid flow through the opening formed by the second end (326) of the sleeve (306) is permitted;
**characterized in that** the sleeve (306) further comprises a plurality of axially aligned slots (346) provided at the second end (326) of the sleeve (306), and **in that**, when the sleeve (306) is in the first open position, fluid flow through the plurality of axially aligned slots (346) is additionally permitted.

2. The apparatus as defined in claim 1, further comprising an actuator (336) coupled to the linkage or the gear (308, 310), wherein the actuator (336) is to move the sleeve (306) via the linkage or the gear (308, 310).

3. The apparatus as defined in any of the preceding claims, wherein the actuator is a linear actuator and is positioned to move a stem of the actuator in a direction substantially perpendicular to an axis along which the sleeve (306) is to move.

4. The apparatus as defined in any of Claims 1 and 2, wherein the actuator is a linear actuator and is positioned to move a stem of the actuator along an axis that is offset from and substantially parallel to an axis along which the sleeve (306) is to move.

5. The apparatus as defined in any of Claims 1 and 2, wherein the linkage or the gear (308, 310) operatively connected to the sleeve (306) is a gear (308, 310), and wherein the sleeve (306) comprises a plurality of teeth (332, 334) on an outside wall of the sleeve (306) to engage the gear (308, 310).

6. The apparatus as defined in any of the preceding claims, further comprising a seal (312) disposed within the passageway to engage the second end (326) of the sleeve.

7. The apparatus as defined in Claim 6, wherein the seal (312) is adjacent to the outlet (318).

8. The apparatus as defined in any of Claims 6 or 7, wherein the plurality of slots (346) are configured such that the area through which fluid may pass of each of the plurality of slots (346) is reduced as the second end (326) of the sleeve engages the seal (312).

9. The apparatus as defined in any of the preceding claims, further comprising a spring coupled between an outer wall of the sleeve (306) and the valve body (302, 304).

10. The apparatus as defined in any of the preceding claims, further comprising a boundary seal (352) coupled between an outer surface (322) of the sleeve (306) and the valve body (302, 304).

11. The apparatus as defined in any of the preceding claims, wherein the valve body (302, 304) comprises a unitary structure between the inlet (316) and the outlet (318).

12. The apparatus as defined in any of the preceding claims, wherein the passageway (314), the inlet (316), and the outlet (318) are substantially aligned along the axis along which the sleeve (306) is to move.

13. The apparatus as defined in any of the preceding claims, wherein slots of the plurality of slots (346) are spaced apart from each another around a circumference of the sleeve (306).

## Patentansprüche

1. Vorrichtung, welche aufweist:
ein Ventilkörper (302, 304) für eine axial Strömung, der einen Durchgang (314) zwischen einem Einlass (316) und einem Auslass (318) bestimmt,
eine Hülse (306), die verschiebbar von einer inneren Oberfläche des Ventilkörpers (302, 304) aufgenommen wird und entlang einer Achse im Wesentlichen parallel zu einer Längsachse (330) des Durchgangs (314) zwischen einer ersten offenen Position und einer zweiten geschlossenen Position bewegbar ist, wobei die Hülse (306) ein erstes Ende (324) und ein zweites Ende (326) aufweist, wobei die Längsachse (330) eine Öffnung schneidet, die durch das zweite Ende gebildet wird, und
ein Gestänge oder ein Zahnrad (308, 310), das in einer wirkenden Weise mit der Hülse (306) verbunden ist, um die Hülse (306) zu bewegen, um einen Fluidstrom zwischen dem Einlass (316) und dem Auslass (318) durch die Hülse (306) zu variieren,
wobei, wenn sich die Hülse (306) in der ersten offenen Position befindet, eine Fluidströmung durch die Öffnung, die durch das zweite Ende (326) der Hülse (306) gebildet wird, zugelassen wird,
**dadurch gekennzeichnet, dass** die Hülse (306) ferner eine Vielzahl von axial ausgerichteten Schlitzen (346) aufweist, die an dem zweiten Ende (326) der Hülse (306) vorgesehen sind, und dass, wenn sich die Hülse (306) in der ersten offenen Position befindet, zusätzlich eine Fluidströmung durch die Vielzahl von axial ausgerichteten Schlitzen (346) zugelassen wird.

2. Vorrichtung nach Anspruch 1, welche ferner einen Stellantrieb (336) aufweist, der mit dem Gestänge oder dem Zahnrad (308, 310) verbunden ist, wobei der Stellantrieb (336) die Hülse (306) über das Gestänge oder über das Zahnrad (308) bewegt (310).

3. Vorrichtung nach einem der vorhergehenden Ansprüche, wobei der Stellantrieb ein linearer Stellantrieb ist und angeordnet ist, um einen Schaft des Stellantriebs in einer Richtung im Wesentlichen senkrecht zu einer Achse zu bewegen, entlang der sich die Hülse (306) bewegen soll.

4. Vorrichtung nach einem der Ansprüche 1 und 2, wobei der Stellantrieb ein linearer Stellantrieb ist und angeordnet ist, um einen Schaft des Stellantriebs entlang einer Achse zu bewegen, die von einer Achse versetzt ist, zu der sich die Hülse (306) bewegen soll.

5. Vorrichtung nach einem der Ansprüche 1 und 2, wobei das Gestänge oder das Zahnrad (308, 310), das in einer wirkenden Weise mit der Hülse (306) verbunden ist, ein Zahnrad (308, 310) ist, und wobei die Hülse (306) eine Vielzahl an Zähnen (332, 334) an einer Außenwand der Hülse (306) aufweist, um in das Zahnrad (308, 310) einzugreifen.

6. Vorrichtung nach einem der vorhergehenden Ansprüche, welche ferner eine Dichtung (312) aufweist, die in dem Durchgang angeordnet ist, um mit dem zweiten Ende (326) der Hülse in Eingriff zu kommen.

7. Vorrichtung nach Anspruch 6, wobei die Dichtung (312) benachbart zu dem Auslass (318) ist.

8. Vorrichtung nach einem der Ansprüche 6 oder 7, wobei die Vielzahl an Schlitzen (346) auf eine solche Weise ausgestaltet ist, dass der Bereich, durch den das Fluid von jedem der Vielzahl an Schlitzen (346) durchgehen kann, als das zweite Ende (326) der Hülse verringert wird, in die Dichtung (312) eingreift.

9. Vorrichtung nach einem der vorhergehenden Ansprüche, welche ferner eine Feder aufweist, die zwischen einer Außenwand der Hülse (306) und dem Ventilkörper (302, 304) gekoppelt ist.

10. Vorrichtung nach einem der vorhergehenden Ansprüche, ferner umfassend eine Grenzdichtung (352), die zwischen einer Außenfläche (322) der Hülse (306) und dem Ventilkörper (302, 304) gekoppelt ist.

11. Vorrichtung nach einem der vorhergehenden Ansprüche, wobei der Ventilkörper (302, 304) eine einheitliche Struktur zwischen dem Einlass (316) und dem Auslass (318) aufweist.

12. Vorrichtung nach einem der vorhergehenden Ansprüche, wobei der Durchgang (314), der Einlass (316) und der Auslass (318) im Wesentlichen entlang der Achse ausgerichtet sind, entlang der sich die Hülse (306) bewegen soll.

13. Vorrichtung nach einem der vorhergehenden Ansprüche, wobei die Schlitze der Vielzahl an Schlitzen (346) voneinander um einen Umfang der Hülse (306) beabstandet sind.

## Revendications

1. Appareil comprenant :
un corps de vanne à écoulement axial (302, 304) définissant une voie de passage (314) entre une entrée (316) et une sortie (318) ;
un manchon (306) reçu de manière coulissante par une surface intérieure du corps de vanne (302, 304) et mobile le long d'un axe sensiblement parallèle à un axe longitudinal (330) de la voie de passage (314) entre une première position ouverte et une seconde position fermée, le manchon (306) ayant une première extrémité (324) et une seconde extrémité (326), l'axe longitudinal (330) traversant une ouverture formée par la seconde extrémité ; et
une tringlerie ou un engrenage (308, 310) relié de manière fonctionnelle au manchon (306) pour déplacer le manchon (306) pour faire varier un écoulement de fluide entre l'entrée (316) et la sortie (318) à travers le manchon (306) ;
dans lequel, lorsque le manchon (306) est dans la première position ouverte, un écoulement de fluide à travers l'ouverture formée par la seconde extrémité (326) du manchon (306) est permis ;
**caractérisé en ce que** le manchon (306) comprend en outre une pluralité de fentes axialement alignées (346) prévues sur la seconde extrémité (326) du manchon (306), et **en ce que**, lorsque le manchon (306) est dans la première position ouverte, un écoulement de fluide à travers la pluralité de fentes axialement alignées (346) est également permis.

2. Appareil selon la revendication 1, comprenant en outre un actionneur (336) couplé à la tringlerie ou à l'engrenage (308, 310), dans lequel l'actionneur (336) va déplacer le manchon (306) via la tringlerie ou l'engrenage (308, 310).

3. Appareil selon l'une quelconque des revendications précédentes, dans lequel l'actionneur est un actionneur linéaire et est positionné pour déplacer une tige de l'actionneur dans une direction sensiblement perpendiculaire à un axe le long duquel le manchon (326) va se déplacer.

4. Appareil selon l'une quelconque des revendications 1 ou 2, dans lequel l'actionneur est un actionneur linéaire et est positionné pour déplacer une tige de l'actionneur le long d'un axe qui est décalé par rapport et sensiblement parallèle à un axe le long duquel le manchon (306) va se déplacer.

5. Appareil selon l'une quelconque des revendications 1 et 2, dans lequel la tringlerie ou l'engrenage (308, 310) relié de manière fonctionnelle au manchon (306) est un engrenage (308, 310), et dans lequel le manchon (306) comprend une pluralité de dents (332, 334) sur une paroi extérieure du manchon (306) pour s'engager avec l'engrenage (308, 310).

6. Appareil selon l'une quelconque des revendications précédentes, comprenant en outre un joint (312) disposé à l'intérieur de la voie de passage pour s'engager avec la seconde extrémité (326) du manchon.

7. Appareil selon la revendication 6, dans lequel le joint (312) est au voisinage de la sortie (318).

8. Appareil selon l'une quelconque des revendications 6 ou 7, dans lequel la pluralité de fentes (346) est configurée de telle sorte que l'aire à travers laquelle du fluide peut passer de chacune de la pluralité de fentes (346) est réduite lorsque la seconde extrémité (326) du manchon s'engage avec le joint (312).

9. Appareil selon l'une quelconque des revendications précédentes, comprenant en outre un ressort couplé entre une paroi extérieure du manchon (306) et le corps de vanne (302, 304).

10. Appareil selon l'une quelconque des revendications précédentes, comprenant en outre un joint de frontière (352) couplé entre une surface extérieure (322) du manchon (306) et le corps de vanne (302, 304).

11. Appareil selon l'une quelconque des revendications précédentes, dans lequel le corps de vanne (302, 304) comprend une structure unitaire entre l'entrée (316) et la sortie (318).

12. Appareil selon l'une quelconque des revendications précédentes, dans lequel la voie de passage (314), l'entrée (316) et la sortie (318) sont sensiblement alignées le long de l'axe le long duquel le manchon (306) doit se déplacer.

13. Appareil selon l'une quelconque des revendications précédentes, dans lequel des fentes de la pluralité de fentes (346) sont espacées les unes des autres autour d'une circonférence du manchon (306).
